# EUROPÄISCHE PATENTSCHRIFT

(11) **EP 4 026 628 B1**
(45) Veröffentlichungstag und Bekanntmachung des Hinweises auf die Patenterteilung: **09.08.2023**
(21) Anmeldenummer: 21215163.3
(22) Anmeldetag: 16.12.2021
(51) Int. Cl.: B22D 17/22, B22D 18/00, B22D 17/32, B29C 45/26, B29C 45/76

(54) **VERFAHREN UND VORRICHTUNG ZUR ÜBERWACHUNG DER BEDECKUNG EINER FORMOBERFLÄCHE EINES FORMWERKZEUGS MIT EINEM PROZESSHILFSSTOFF IN EINEM GIESSPROZESS**
METHOD AND APPARATUS FOR MONITORING THE COVERING OF A SURFACE OF A MOULD WITH A RELEASING AGENT IN A CASTING PROCESS
PROCÉDÉ ET DISPOSITIF DE SURVEILLANCE DU RECOUVREMENT D'UNE SURFACE DE MOULAGE D'UN OUTIL DE MOULAGE AU MOYEN D'UN AGENT DE DÉMOULAGE DANS UN PROCÉDÉ DE COULÉE

(30) Priorität: 08.01.2021 DE 102021100216
(43) Veröffentlichungstag der Anmeldung: 13.07.2022
(73) Patentinhaber: Universität Kassel, 34125 Kassel (DE)
(72) Erfinder: SODE, Marco, 37235 Hess. Lichtenau (DE); SCHWENKE, Niklas, 34388 Trendelburg (DE); SCHILLING, Andreas, 34119 Kassel (DE); FEHLBIER, Martin, 34225 Baunatal (DE); JÜNGST, Daniel, 35287 Amöneburg (DE)
(74) Vertreter: Walther Bayer Faber Patentanwälte PartGmbB

(56) Entgegenhaltungen:
- WO-A1-02/062508
- WO-A1-2020/127347
- JP-A- 2013 212 526

## Beschreibung

Die vorliegende Erfindung betrifft ein Verfahren zur Überwachung der Bedeckung einer Formoberfläche eines Formwerkzeugs mit einem Prozesshilfsstoff in einem Gießprozess, wobei der Gießprozess einen Prozessschritt des Applizierens des Prozesshilfsstoffs auf die Formoberfläche des Formwerkzeugs und wenigstens einen Prozessschritt des Füllens des Formwerkzeugs mit einem Werkstoff umfasst. Weiterhin betrifft die Erfindung ein System zum Gießen von Formteilen, welches zur Durchführung des erfindungsgemäßen Verfahrens ausgebildet ist.

### STAND DER TECHNIK

In Gießprozessen aus dem Stand der Technik, insbesondere beim metallischen Dauerformenguss und beim Kunststoffspritzguss, kommen üblicherweise Prozesshilfsstoffe auf den Formoberflächen der Formwerkzeuge zum Einsatz. Im klassischen Druckguss, in artverwandten Semi-Solid-Gießverfahren oder auch Spritzguss dienen Prozesshilfsstoffe der Sicherstellung eines geregelten Prozessablaufs, indem sie die Formfüllung unterstützen und ein Anhaften der Formteile beim Entformen verhindern. Eine Reihe von Prozesshilfsstoffen wird entsprechend dieser Funktion auch als Trennmittel bezeichnet. Trennmittel bestehen je nach Einsatzumfeld aus verschiedenen synthetischen oder natürlichen Ölen, Wachsen und/ oder Polysiloxanverbindungen. Beim Kokillenguss werden als Prozesshilfsstoffe Schlichten eingesetzt, welche neben den oben genannten Effekten im Druck- oder auch Spritzguss, einen gezielten Wärmetransport zwischen Material und Form sicherstellen. Bei gebräuchlichen Dauerformen handelt es sich um temperierte Formwerkzeuge aus Warmarbeitsstahl, welche während des Gießprozesses beispielsweise auf Temperaturen von bis zu 400°C erwärmt werden. Vor der Formfüllung wird der Prozesshilfsstoff auf die Formoberfläche aufgetragen, wobei beispielsweise eine Emulsion aus Wasser oder einem sonstigen Lösungsmittel und dem Prozesshilfsstoffkonzentrat aufgesprüht oder eine Schlichte geeignet appliziert wird. In weiterer Folge verdampfen die Lösungsmittelbestandteile und ein Prozesshilfsstofffilm bleibt auf der Formoberfläche zurück. Die Applizierung der Prozesshilfsstoffe erfolgt in der Praxis mittels Appliziereinheiten, beispielsweise in Form von Sprühvorrichtungen. Alternativ können auch trockene Trennmittel verwendet werden, welche mittels elektrostatischer Aufladung auf der Werkzeugoberfläche abgeschieden werden.

Für einen reibungslosen Prozessablauf ist es notwendig, eine vollständige Bedeckung der Formoberfläche mit dem Prozesshilfsstoff zu realisieren, wobei jedoch zu beachten ist, dass eine zu dicke Prozesshilfsstoffschicht zu Maßabweichungen und oberflächlichen Porositäten und/oder Fremdstoffeinschlüssen am gegossenen Formteil führen kann. Eine Überdosierung von Prozesshilfsstoffen ist zudem unter Gesichtspunkten der Ressourcenschonung und des anfallenden Reinigungsaufwandes unerwünscht.

Im Stand der Technik wird der Einsatz von Prozesshilfsstoffen beispielsweise mittels einer Durchflussmessung in der Zuleitung der Appliziereinheit überwacht, wie in der EP 0 941 788 A2 offenbart. Nachteiligerweise ergibt sich aus einem solchen Verfahren keine Information über den flächigen Bedeckungsgrad der Formoberfläche oder die Homogenität der Dicke der Prozesshilfsstoffschicht.

Eine weitere bekannte Überwachungsmethode ist die optische Kontrolle der Formoberfläche des Formwerkzeugs mittels einer Beimischung von Farbpigmenten oder fluoreszierenden Substanzen in den Prozesshilfsstoff. Nachteiligerweise können diese Beimischungen allerdings Rückstände auf dem Formteil hinterlassen und beinträchtigen damit nachfolgende Bearbeitungsschritte, wie beispielsweise Klebe- oder Lackierprozesse, beziehungsweise verursachen optische Beanstandungen. Die üblicherweise verwendeten fluoreszierenden Substanzen sind für den Einsatz in Gießprozessen zudem oftmals nicht ausreichend temperaturbeständig.

Weiterhin offenbart die WO 02/062508 A1 ein Verfahren zum Beschichten von Walzen einer Doppelwalzen-Stranggussmaschine, wobei eine Trennmittellösung auf die Walzen appliziert wird, und wobei im Rahmen der Prozessüberwachung die applizierte Menge an Trennmittel mittels eines optischen Detektors, beispielsweise eines Infrarot-Detektors, bestimmt wird.

### OFFENBARUNG DER ERFINDUNG

Es ist daher die Aufgabe der vorliegenden Erfindung, ein Verfahren zur Überwachung der Bedeckung einer Formoberfläche eines Formwerkzeugs mit einem Prozesshilfsstoff in einem Gießprozess vorzuschlagen, welches die Nachteile der vorgenannten Ansätze aus dem Stand der Technik überwindet.

Diese Aufgabe wird ausgehend von einem Verfahren gemäß des Oberbegriffs des Anspruchs 1, sowie einem zweckmäßigen System gemäß Anspruch 5 gelöst. Vorteilhafte Weiterbildungen der Erfindung sind in den abhängigen Ansprüchen angegeben.

Die technische Lehre der Erfindung offenbart ein Verfahren zur Überwachung der Bedeckung einer Formoberfläche eines Formwerkzeugs mit einem Prozesshilfsstoff in einem Gießprozess, wobei der Gießprozess einen Prozessschritt des Applizierens des Prozesshilfsstoffs auf die Formoberfläche des Formwerkzeugs und wenigstens einen Prozessschritt des Füllens des Formwerkzeugs mit einem Werkstoff umfasst, wobei erfindungsgemäß nach dem Applizieren des Prozesshilfsstoffs und/oder vor dem Füllen des Formwerkzeugs wenigstens ein Infrarotbild der Formoberfläche in einem Spektralbereich einer charakteristischen Absorptionsbande des Prozesshilfsstoffs aufgenommen wird, wobei die Bedeckung der Formoberfläche mit dem Prozesshilfsstoff anhand des Beitrags der Infrarotabsorption des Prozesshilfsstoffs zum Infrarotbild ermittelt wird, wobei ausgenutzt wird, dass der Beitrag der Infrarotabsorption des Prozesshilfsstoffs einen Kontrast im Infrarotbild erzeugt zwischen Bereichen der Formoberfläche mit aufgebrachtem Prozesshilfsstoff und solchen Bereichen an denen die Prozesshilfsstoffschicht nicht vorhanden bzw. zu dünn ausgebildet ist.

Die Erfindung geht dabei von dem Gedanken aus, den Prozesshilfsstoff anhand seiner charakteristischen Infrarotabsorptionseigenschaften zu detektieren und die Bedeckung der Formoberfläche damit ortsaufgelöst darzustellen und zu überwachen. Dabei ist es insbesondere auch möglich, die Dicke einer Prozesshilfsstoffschicht auf der Formoberfläche zumindest qualitativ zu bestimmen.

Die üblicherweise als Prozesshilfsstoff verwendeten Trennmittel basieren auf Kohlenwasserstoffverbindungen, deren charakteristische Absorptionsbanden typischerweise im Spektralbereich der mittleren bis langwelligen Infrarotstrahlung liegt, d.h. bei Strahlung mit Wellenlängen zwischen 3 Mikrometer und 50 Mikrometer. Im Sinne der vorliegenden Erfindung können die Infrarotbilder jedoch auch in den Spektralbereichen des nahen oder fernen Infrarots aufgenommen werden, falls dies für einen konkret eingesetzten Prozesshilfsstoff zweckmäßig ist. Die von der zu überwachenden Formoberfläche abgegebene Infrarotstrahlung tritt beim Durchlaufen der applizierten Prozesshilfsstoffschicht mit dieser in Wechselwirkung und dabei wird das Spektrum der Infrarotstrahlung durch charakteristische Absorption modifiziert.

Das erfindungsgemäß zur Überwachung der Bedeckung der Formoberfläche aufgenommene Infrarotbild wird vorzugsweise aus einem solchen Teil des Infrarotspektrums gebildet, welcher starke Absorptionsbanden des verwendeten Prozesshilfsstoffs enthält, sodass sich die Wechselwirkung des Prozesshilfsstoffs mit der von der Formoberfläche abgegebenen Infrarotstrahlung signifikant, d.h. stark kontrastbildend, im aufgenommenen Infrarotbild niederschlägt. Prinzipiell wäre es auch möglich, spektral aufgelöste Messungen durchzuführen, d.h. eine Mehrzahl von Messungen in unterschiedlichen Spektralbereichen aufzunehmen und im Rahmen eines post-processing die zur Überwachung der Bedeckung der Formoberfläche geeignetsten Spektralbereiche zweckmäßig auszuwählen. Im Rahmen der Ortsauflösung des aufgenommenen Infrarotbildes lässt sich erfindungsgemäß insbesondere auch die Homogenität der Bedeckung der Formoberfläche mit dem Prozesshilfsstoff bewerten, d.h. dass beispielsweise Oberflächenabschnitte identifiziert werden können, welche eine zu dünne oder gar keine Prozesshilfsstoffschicht aufweisen.

Das erfindungsgemäße Verfahren ist prinzipiell auf sämtliche Gießprozesse anwendbar, beispielsweise auf Druckguss-, Kokillenguss- oder Spritzgussverfahren.

Erfindungsgemäß wird das Infrarotbild in einem Spektralbereich einer charakteristischen Absorptionsbande des Prozesshilfsstoffs aufgenommen. Das Infrarotbild zeigt dann einen besonders starken Kontrast zwischen Bereichen der Formoberfläche mit aufgebrachtem Prozesshilfsstoff und solchen Bereichen an denen die Prozesshilfsstoffschicht nicht vorhanden bzw. zu dünn ausgebildet ist. Dies ermöglicht eine besonders rasche und effiziente Onlineüberwachung des Gießprozesses.

Vorzugsweise wird der Beitrag der Infrarotabsorption des Prozesshilfsstoffs bestimmt, indem das Infrarotbild mit einem ersten Referenz-Infrarotbild und/oder mit einem zweiten Referenz-Infrarotbild verglichen wird, wobei das erste Referenz-Infrarotbild an der Formoberfläche in einem Prozesshilfsstoff-freien Zustand aufgenommen ist, und wobei das zweite Referenz-Infrarotbild an der Formoberfläche mit einer für den Gießprozess optimalen Bedeckung mit dem Prozesshilfsstoff aufgenommen ist. Der Vergleich des zur Überwachung aufgenommenen Infrarotbildes mit derartigen Referenz-Infrarotbildern ermöglicht eine einfache Zuordnung der aufgenommenen Intensitäten zu einer vorliegenden Dicke der Prozesshilfsstoffschicht. Die vom Prozesshilfsstoff absorbierte Intensität der Infrarotstrahlung steht in funktionalem Zusammenhang mit der Dicke der durchlaufenen Prozesshilfsstoffschicht, sodass zur Abschätzung der vorliegenden Schichtdicke eine geeignete Interpolation zwischen den Intensitätswerten im ersten und im zweiten Referenz-Infrarotbild vorgenommen werden kann. Dabei entsprechen die Intensitätswerte im ersten Referenz-Infrarotbild einer Schichtdicke "Null" und die Intensitätswerte im zweiten Referenz-Infrarotbild repräsentieren eine optimale Schichtdicke.

Der Vergleich mit Referenz-Infrarotbildern ist aufgrund des materialspezifischen Emissionsverhaltens metallischer Oberflächen sowie der Messgeometrie zu berücksichtigen. Dabei haben die Oberflächenstruktur, bspw. die Rauheit oder eine oberflächliche Oxidschicht, die Temperatur wie auch der Betrachtungswinkel einen Einfluss auf die emittierte bzw. gemessene Infrarotstrahlung. Zweckmäßig ist der Vergleich mit Referenz-Infrarotbildern beispielsweise dann, wenn die zu überwachende Formoberfläche nicht rein planar ausgebildet ist, sondern Krümmungen, Kanten oder eine sonstige komplexe Topographie aufweist. Hintergrund dazu ist, dass der Emissionsgrad einer Oberfläche bei der Abstrahlung von Wärmestrahlung eine Richtungsabhängigkeit aufweist, derart, dass unter flachen Sichtwinkeln auf die strahlende Oberfläche eine in Abhängigkeit vom Material teils signifikante Abschwächung der in Richtung der lokalen Oberflächennormalen abgestrahlten Intensität vorliegt. Daher weist ein von einer gekrümmten Formoberfläche aufgenommenes Infrarotbild selbst bei Vorliegen einer perfekt homogenen Prozesshilfsstoffschicht eine inhomogene Intensitätsverteilung auf. Um die oben beschriebenen Effekte korrekt zu berücksichtigen, ist es zweckmäßig, Referenz-Infrarotbilder zum Vergleich heranzuziehen. Selbstverständlich ist dafür Sorge zu tragen, dass das der Überwachung dienende Infrarotbild und die Referenz-Infrarotbilder unter einem identischen Messwinkel (Sichtwinkel) zwischen der verwendeten Thermografiekamera und der Formoberfläche aufgenommen werden, und dass Intensität und Spektrum der Strahlungsquelle jeweils übereinstimmen.

Vorzugsweise kann zudem an dem Formwerkzeug ein Referenzabschnitt vorgesehen sein, auf welchen beim Applizieren des Prozesshilfsstoffs auf die Formoberfläche kein Prozesshilfsstoff appliziert wird, wobei vor oder mit oder nach dem Aufnehmen des Infrarotbildes der Formoberfläche auch ein Infrarotbild des Referenzabschnitts aufgenommen wird, wobei der Beitrag der Infrarotabsorption des Prozesshilfsstoffs bestimmt wird, indem das Infrarotbild der benetzten Formoberfläche mit dem Infrarotbild des Referenzabschnitts verglichen wird. In diesem Fall dient das Infrarotbild des Referenzabschnitts als Referenz für die Intensität der Prozesshilfsstoff-freien Formoberfläche. Diese Referenz kann verwendet werden, um aus dem zur Überwachung aufgenommenen Infrarotbild den Beitrag der Prozesshilfsstoffschicht zu extrahieren. Ein solcher Referenzabschnitt ist insbesondere auch deshalb als Referenz geeignet, da er eine ähnliche Temperatur aufweist wie die Formoberfläche, und somit eine identische Wärmestrahlungsquelle darstellt.

Mit besonderem Vorteil wird das Formwerkzeug prozessbedingt erwärmt und fungiert somit als Strahlungsquelle beim Aufnehmen des Infrarotbildes der Formoberfläche, des ersten Referenz-Infrarotbildes, des zweiten Referenz-Infrarotbildes und/oder des Infrarotbildes des Referenzabschnitts. Es ist damit erfindungsgemäß insbesondere nicht notwendig, die Formoberfläche mittels einer separaten Wärmestrahlungsquelle zu beleuchten, um ein entsprechendes Infrarotbild in Reflektion aufnehmen zu können.

Des Weiteren betrifft die Erfindung ein System zum Gießen von Formteilen, wenigstens umfassend eine Gießvorrichtung mit einem Formwerkzeug mit einer Formoberfläche, eine Appliziereinheit zum Applizieren eines Prozesshilfsstoffs, insbesondere als Trennmittelemulsion oder als Formschlichte, auf die Formoberfläche, eine Thermografiekamera und eine Auswerteeinheit, wobei die Thermografiekamera zum Aufnehmen eines Infrarotbildes der Formoberfläche in einem Spektralbereich einer charakteristischen Absorptionsbande des Prozesshilfsstoffs ausgebildet ist und wobei die Auswerteeinheit zum Ermitteln der Bedeckung der Formoberfläche mit dem Prozesshilfsstoff anhand des Beitrags der Infrarotabsorption des Prozesshilfsstoffs zum Infrarotbild ausgebildet ist, wobei ausgenutzt wird, dass der Beitrag der Infrarotabsorption des Prozesshilfsstoffs einen Kontrast im Infrarotbild erzeugt zwischen Bereichen der Formoberfläche mit aufgebrachtem Prozesshilfsstoff und solchen Bereichen an denen die Prozesshilfsstoffschicht nicht vorhanden bzw. zu dünn ausgebildet ist. Das System ist insbesondere zum Kunststoffspritzgießen oder zum Metallgießen ausgebildet, d.h. die jeweilige Gießvorrichtung umfasst insbesondere eine Plastifiziereinheit für ein Metall- oder Kunststoffvorprodukt zum Plastifizieren oder eine Zuführung des flüssigen oder teilflüssigen Metalls, Aufbereiten und Dosieren von Kunststoff sowie eine Schließeinheit, die das Formwerkzeug schließt, zuhält und wieder öffnet. Die Appliziereinheit ist beispielsweise in Form einer linearen Sprühvorrichtung oder eines Roboters mit Sprühkopf ausgebildet, welche zwischen die Hälften des geöffneten Formwerkzeugs einfahrbar ist. Die Thermografiekamera ist zweckmäßig in Relation zu dem Formwerkzeug derart angeordnet, dass ein Infrarotbild der Formoberfläche bei geöffnetem Formwerkzeug aufnehmbar ist. Die Thermografiekamera kann beweglich angeordnet sein, um Infrarotbilder der Formoberfläche auf beiden Hälften des Formwerkzeugs aufnehmen zu können oder das System umfasst zwei oder mehr Thermografiekameras, welche jeweils der Formoberfläche einer Hälfte des Formwerkzeugs zugeordnet sind.

Vorzugsweise weist das System einen der Thermografiekamera zugeordneten Bandpassfilter auf, wobei der Bandpassfilter in einem Spektralbereich einer charakteristischen Absorptionsbande des Prozesshilfsstoffs lichtdurchlässig ist. Durch den Bandpassfilter wird die bildgebende Infrarotstrahlung auf einen Spektralbereich beschränkt, welcher einen hohen Informationsgehalt bzgl. das Vorliegen einer Prozesshilfsstoffschicht kodiert, sodass der Aufwand beim digitalen post-processing des aufgenommenen Infrarotbildes minimiert werden kann. Des Weiteren kann durch den Bandpassfilter das Auftreten von Überstrahlungseffekten bei der Bildaufnahme reduziert werden.

In vorteilhafter Ausführungsform des erfindungsgemäßen Systems ist die Thermografiekamera an der Appliziereinheit angeordnet. Dadurch kann die Thermografiekamera in eine zur Aufnahme der Infrarotbilder optimale Position zwischen den Hälften des Formwerkzeugs gebracht werden. Insbesondere ist der Blickwinkel der Thermografiekamera dann im Wesentlichen lotrecht auf die zu überwachende Formoberfläche gerichtet, sodass Abschwächungen oder Inhomogenitäten in der aufgenommenen Infrarotstrahlung aufgrund des winkelabhängigen Emissionsgrades reduziert werden können.

Zuletzt lehrt die vorliegende Erfindung die Verwendung des erfindungsgemäßen Systems entsprechend einer der vorgenannten Ausführungsformen zur Durchführung des erfindungsgemäßen Verfahrens.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine schematische Querschnittsansicht einer Thermografiekamera in Anordnung vor einer zu überwachenden Formoberfläche, und
- Fig. 2: eine schematische Querschnittsansicht des erfindungsgemäßen Systems.

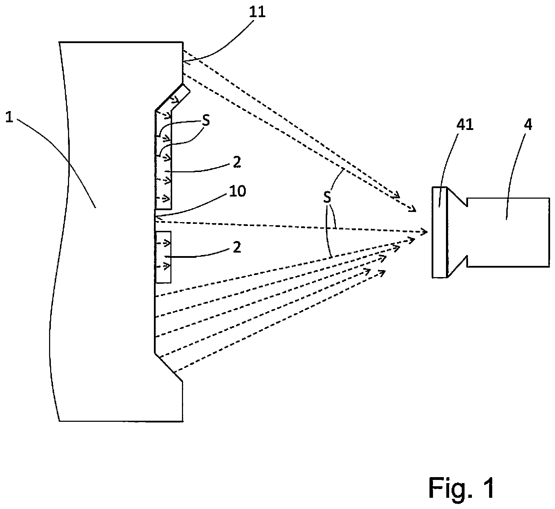

Fig. 1 zeigt eine schematische Querschnittsansicht einer Thermografiekamera 4 in Anordnung vor einer zu überwachenden Formoberfläche 10 zur Illustration des erfindungsgemäßen Verfahrens. Dargestellt ist eine Hälfte eines Formwerkzeugs 1 mit der Formoberfläche 10, welche im vorliegenden Fall unvollständig durch eine Schicht des Prozesshilfsstoffs 2 bedeckt ist. Die Thermografiekamera 4 ist mittig vor der Formoberfläche 10 angeordnet und zur Aufnahme eines Infrarotbildes aus der Infrarotstrahlung S ausgerichtet. Die Infrarotstrahlung S wird von der Oberfläche des im Zuge des Gießprozesses erwärmten Formwerkzeugs 1 emittiert, d.h. sowohl von der Formoberfläche 10, welche den nach innen einspringenden Abschnitt der Oberfläche des Formwerkzeugs 1 bildet, als auch von dem oberhalb der Formoberfläche 10 angeordneten Referenzabschnitt 11.

Die dargestellte Infrarotstrahlung S entspricht hier einem Spektralbereich mit ausgeprägter Absorption durch das Prozesshilfsstoff 2 und in der hier gezeigten, stark vereinfachten Darstellung wird die Infrarotstrahlung S innerhalb der Schicht des Prozesshilfsstoffs 2 vollständig absorbiert. Beispielsweise kann ein Prozesshilfsstoff 2 verwendet werden, welches unter dem Produktnamen Die Lubric 5050 von Fa. Petrofer vertrieben wird, und welches starke charakteristische Absorptionsbanden im Spektralbereich der Wellenzahlen von 1000/cm bis 1100/cm aufweist,

Vor der Eintrittsöffnung der Thermografiekamera 4 ist der Bandpassfilter 41 angeordnet, welcher eine Durchlässigkeit im Spektralbereich der dargestellten Infrarotstrahlung S aufweist. Das im vorliegenden Fall aufgenommene Infrarotbild weist Intensitätsminima im Bereich der mit dem Prozesshilfsstoff 2 bedeckten Formoberfläche 10 auf und Intensitätsmaxima in Bereichen mit Prozesshilfsstoff-freier Formoberfläche 10. Lokal unterschiedliche Dicken der Prozesshilfsstoffschicht 2 sind dabei anhand entsprechender Intensitätsvariationen im Infrarotbild identifizierbar.

Das aufgenommene Infrarotbild wird von der Thermografiekamera 4 an eine Auswerteeinheit übermittelt, welche dazu ausgebildet ist, die Bedeckung der Formoberfläche 10 mit dem Prozesshilfsstoff 2 anhand des Beitrags des Infrarotabsorption des Prozesshilfsstoffs 2 zum Infrarotbild zu ermitteln. Dabei wird als Intensitätsreferenz für die Abstrahlung einer Prozesshilfsstoff-freien Oberfläche beispielsweise das Infrarotbild des Referenzabschnitts 11 herangezogen. Alternativ oder zusätzlich können weitere Referenz-Infrarotbilder zur Bildauswertung berücksichtigt werden, welche insbesondere an einer vollständig Prozesshilfsstoff-freien Formoberfläche 10 und an einer Formoberfläche 10 mit einer für den Gießprozess optimalen Bedeckung mit Prozesshilfsstoff 2 hinsichtlich Schichtdicke und Homogenität aufgenommen wurden. Letztere Referenz-Infrarotbilder können in einer Speichereinheit der Auswerteeinheit hinterlegt sein.

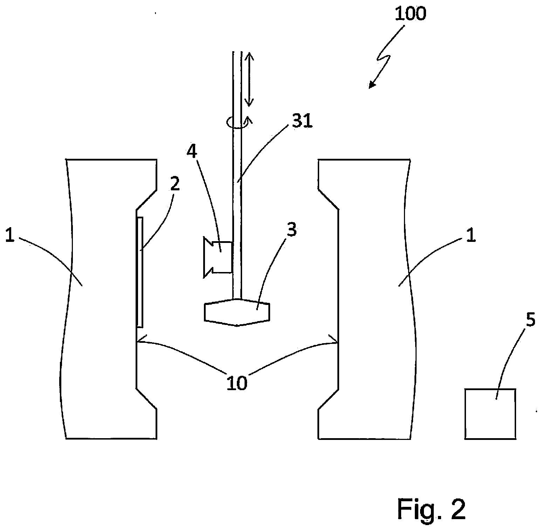

Fig. 2 zeigt eine schematische Querschnittsansicht des erfindungsgemäßen Systems 100 umfassend das Formwerkzeug 1, die Appliziereinheit 3 zum Applizieren von Prozesshilfsstoff 2 auf die Formoberfläche 10, die Thermografiekamera 4 sowie die Auswerteeinheit 5. In dem hier dargestellten Ausführungsbeispiel ist die Thermografiekamera 4 gemeinsam mit der Appliziereinheit 3 an der Linearvorrichtung 31 aufgenommen, wobei die Linearvorrichtung 31 in den Spalt zwischen den Hälften des geöffneten Formwerkzeugs 1 einfahrbar sowie um ihre Längsachse drehbar ist.

Das Applizieren des Prozesshilfsstoffs 2 erfolgt durch ein Verspritzen beispielsweise einer Emulsion aus Prozesshilfsstoff und Wasser mittels der Appliziereinheit 3 auf die Formoberfläche 10 beider Hälften des geöffneten Formwerkzeugs 1. Im Anschluss daran wird im Rahmen des erfindungsgemäßen Verfahrens mindestens ein Infrarotbild der Formoberfläche 10 mittels der Thermografiekamera 4 aufgenommen und mittels einer hier nicht dargestellten Verbindung zur Datenübertragung an die Auswerteeinheit 5 übermittelt. Wie zuvor dargestellt ist die Auswerteeinheit 5 zum Ermitteln des Beitrags der Infrarotabsorption des Prozesshilfsstoffs 2 zum aufgenommenen Infrarotbild ausgebildet, wodurch die erfindungsgemäße Überwachung der Bedeckung der Formoberfläche 10 mit dem Prozesshilfsstoff 2 realisiert wird.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen oder Verfahrensschritte, können sowohl für sich als auch in den verschiedensten Kombinationen erfindungswesentlich sein.

### Bezugszeichenliste:

- 100: System
- 1: Formwerkzeug
- 10: Formoberfläche
- 11: Referenzabschnitt
- 2: Prozesshilfsstoff
- 3: Appliziereinheit
- 31: Linearvorrichtung
- 4: Thermografiekamera
- 41: Bandpassfilter
- 5: Auswerteeinheit
- S: Infrarotstrahlung

## Patentansprüche

1. Verfahren zur Überwachung der Bedeckung einer Formoberfläche (10) eines Formwerkzeugs (1) mit einem Prozesshilfsstoff (2) in einem Gießprozess, wobei der Gießprozess einen Prozessschritt des Applizierens des Prozesshilfsstoffs (2) auf die Formoberfläche (10) des Formwerkzeugs (1) und wenigstens einen Prozessschritt des Füllens des Formwerkzeugs (1) mit einem Werkstoff umfasst,
**dadurch gekennzeichnet,**
**dass** nach dem Applizieren des Prozesshilfsstoffs (2) und/oder vor dem Füllen des Formwerkzeugs (1) wenigstens ein Infrarotbild der Formoberfläche (10) in einem Spektralbereich einer charakteristischen Absorptionsbande des Prozesshilfsstoffs (2) aufgenommen wird, wobei die Bedeckung der Formoberfläche (10) mit dem Prozesshilfsstoff (2) anhand des Beitrags der Infrarotabsorption des Prozesshilfsstoffs (2) zum Infrarotbild ermittelt wird, wobei ausgenutzt wird, dass der Beitrag der Infrarotabsorption des Prozesshilfsstoffs (2) einen Kontrast im Infrarotbild erzeugt zwischen Bereichen der Formoberfläche (10) mit aufgebrachtem Prozesshilfsstoff (2) und solchen Bereichen an denen die Prozesshilfsstoffschicht (2) nicht vorhanden bzw. zu dünn ausgebildet ist.

2. Verfahren nach Anspruch 1,
**dadurch gekennzeichnet,**
**dass** der Beitrag der Infrarotabsorption des Prozesshilfsstoffs (2) bestimmt wird, indem das Infrarotbild mit einem ersten Referenz-Infrarotbild und/oder mit einem zweiten Referenz-Infrarotbild verglichen wird, wobei das erste Referenz-Infrarotbild an der Formoberfläche (10) in einem Prozesshilfsstoff-freien Zustand aufgenommen ist, und wobei das zweite Referenz-Infrarotbild an der Formoberfläche (10) mit einer für den Gießprozess optimalen Bedeckung mit dem Prozesshilfsstoff (2) aufgenommen ist.

3. Verfahren nach einem der vorgenannten Ansprüche,
**dadurch gekennzeichnet,**
**dass** an dem Formwerkzeug (1) ein Referenzabschnitt (11) vorgesehen wird, auf welchen beim Applizieren des Prozesshilfsstoffs (2) auf die Formoberfläche (10) kein Prozesshilfsstoff (2) appliziert wird, wobei vor oder mit oder nach dem Aufnehmen des Infrarotbildes der Formoberfläche (10) auch ein Infrarotbild des Referenzabschnitts (11) aufgenommen wird, wobei der Beitrag der Infrarotabsorption des Prozesshilfsstoffs (2) bestimmt wird, indem das Infrarotbild der Formoberfläche (10) mit dem Infrarotbild des Referenzabschnitts (11) verglichen wird.

4. Verfahren nach einem der vorgenannten Ansprüche,
**dadurch gekennzeichnet,**
**dass** das Formwerkzeug (1) in dem Gießprozess erwärmt wird und als Strahlungsquelle beim Aufnehmen des Infrarotbildes der Formoberfläche (10), des ersten Referenz-Infrarotbildes, des zweiten Referenz-Infrarotbildes und/oder des Infrarotbildes des Referenzabschnitts (11) fungiert.

5. System (100) zum Gießen von Formteilen wenigstens umfassend eine Gießvorrichtung mit einem Formwerkzeug (1) mit einer Formoberfläche (11), eine Appliziereinheit (3) zum Applizieren eines Prozesshilfsstoffs (2) auf die Formoberfläche (10), eine Thermografiekamera (4) und eine Auswerteeinheit (5), wobei die Thermografiekamera (4) zum Aufnehmen eines Infrarotbildes der Formoberfläche (10) in einem Spektralbereich einer charakteristischen Absorptionsbande des Prozesshilfsstoffs (2) ausgebildet ist, und wobei die Auswerteeinheit (5) zum Ermitteln der Bedeckung der Formoberfläche (10) mit dem Prozesshilfsstoff (2) anhand des Beitrags der Infrarotabsorption des Prozesshilfsstoffs (2) zum Infrarotbild ausgebildet ist, wobei ausgenutzt wird, dass der Beitrag der Infrarotabsorption des Prozesshilfsstoffs (2) einen Kontrast im Infrarotbild erzeugt zwischen Bereichen der Formoberfläche (10) mit aufgebrachtem Prozesshilfsstoff (2) und solchen Bereichen an denen die Prozesshilfsstoffschicht (2) nicht vorhanden bzw. zu dünn ausgebildet ist.

6. System (100) nach Anspruch 5,
**dadurch gekennzeichnet,**
**dass** das System (100) einen der Thermografiekamera (4) zugeordneten Bandpassfilter (41) aufweist, wobei der Bandpassfilter (41) in einem Spektralbereich einer charakteristischen Absorptionsbande des Prozesshilfsstoffs (2) lichtdurchlässig ist.

7. System (100) nach Anspruch 5 oder 6,
**dadurch gekennzeichnet,**
**dass** die Thermografiekamera (4) an der Appliziereinheit (3) angeordnet ist.

8. Verwendung eines Systems (100) nach einem der Ansprüche 5 bis 7 zur Durchführung eines Verfahrens nach einem der Ansprüche 1 bis 4.

## Claims

1. A method of monitoring the covering of a mold surface (10) of a mold (1) using an auxiliary process agent (2) in a casting process, wherein the casting process comprises a process step of applying the auxiliary process agent (2) to the mold surface (10) of the mold (1) and at least one process step of filling the mold (1) with a material, **characterized in that**
at least one infrared image of the mold surface (10) is recorded after the application of the auxiliary process agent (2) and/or before the filling of the mold (1) in a spectral range of a characteristic absorption band of the auxiliary process agent (2), with the covering of the mold surface (10) with the auxiliary process agent (2) being determined with reference to the contribution of the infrared absorption of the auxiliary process agent (2) to the infrared image, and with the fact being utilized that the contribution of the infrared absorption of the auxiliary process agent (2) generates a contrast in the infrared image between zones of the mold surface (10) with an applied auxiliary process agent (2) and such zones at which the auxiliary process agent layer (2) is not present or is too thin.

2. A method in accordance with claim 1,
**characterized in that**
the contribution of the infrared absorption of the auxiliary process agent (2) is determined **in that** the infrared image is compared with a first reference infrared image and/or with a second reference infrared image, with the first reference infrared image being recorded at the mold surface (10) in a state free of an auxiliary process agent (2), and with the second reference infrared image being recorded at the mold surface (10) having a covering with the auxiliary process agent (2) that is optimum for the casting process.

3. A method in accordance with one of the preceding claims,
**characterized in that**
a reference section (11) is provided at the mold (1) on which no auxiliary process agent (2) is applied on the application of the auxiliary process agent (2) to the mold surface (10), with an infrared image of the reference section (11) also being recorded before or with or after the recording of the infrared image of the mold surface (10), and with the contribution of the infrared absorption of the auxiliary process agent (2) being determined **in that** the infrared image of the mold surface (10) is compared with the infrared image of the reference section (11).

4. A method in accordance with one of the preceding claims,
**characterized in that**
the mold (1) is heated in the casting process and acts as a radiation source on the recording of the infrared image of the mold surface (10), of the first reference infrared image, of the second reference infrared image, and/or of the infrared image of the reference section (11).

5. A system (100) for casting molded parts at least comprising a casting device having a mold (1) having a mold surface (11), an application unit (3) for applying a auxiliary process agent (2) to the mold surface (10), a thermographic camera (4), and an evaluation unit (5), wherein the thermographic camera (4) is configured to record an infrared image of the mold surface (10) in a spectral range of a characteristic absorption band of the auxiliary process agent (2), and wherein the evaluation unit (5) is configured to determine the covering of the mold surface (10) having the auxiliary process agent (2) with reference to the contribution of the infrared absorption of the auxiliary process agent (2) to the infrared image, and wherein the fact is utilized that the contribution of the infrared absorption of the auxiliary process agent (2) generates a contrast in the infrared image between zones of the mold surface (10) with an applied auxiliary process agent (2) and such zones at which the auxiliary process agent layer (2) is not present or is too thin.

6. A system (100) in accordance with claim 5,
**characterized in that**
the system (100) has a bandpass filter (41) associated with the thermographic camera (4), with the bandpass filter (41) being light permeable in a spectral range of a characteristic absorption band of the auxiliary process agent (2).

7. A system (100) in accordance with claim 5 or claim 6,
**characterized in that**
the thermographic camera (4) is arranged at the application unit (3).

8. Use of a system in accordance with one of the claims 5 to 7 for carrying out a method in accordance with one of the claims 1 to 4.

## Revendications

1. Procédé de surveillance du recouvrement d'une surface de moulage (10) d'un outil de moulage (1) avec un agent de démoulage (2) dans un processus de coulée, dans lequel le processus de coulée comprend une étape de processus consistant à appliquer l'agent de démoulage (2) sur la surface de moulage (10) de l'outil de moulage (1) et au moins une étape de processus consistant à remplir l'outil de moulage (1) avec un matériau, **caractérisé en ce que**
après l'application de l'agent de démoulage (2) et/ou avant le remplissage de l'outil de moulage (1), au moins une image infrarouge de la surface de moulage (10) dans un domaine spectral d'une bande d'absorption caractéristique de l'agent de démoulage (2) est enregistrée, dans lequel le recouvrement de la surface de moulage (10) avec l'agent de démoulage (2) est déterminé à l'aide de la contribution de l'absorption infrarouge de l'agent de démoulage (2) à l'image infrarouge, dans lequel on exploite le fait que la contribution de l'absorption infrarouge de l'agent de démoulage (2) génère un contraste dans l'image infrarouge entre des zones de la surface de moulage (10) avec agent de démoulage (2) appliqué et des zones sur lesquelles la couche d'agent de démoulage (2) est absente ou réalisée trop mince.

2. Procédé selon la revendication 1,
**caractérisé en ce que**
la contribution de l'absorption infrarouge de l'agent de démoulage (2) est déterminée en comparant l'image infrarouge avec une première image infrarouge de référence et/ou avec une seconde image infrarouge de référence, dans lequel la première image infrarouge de référence est enregistrée sur la surface de moulage (10) dans un état exempt d'agent de démoulage et dans lequel la seconde image infrarouge de référence est enregistrée sur la surface de moulage (10) avec un recouvrement par l'agent de démoulage (2) optimal pour le processus de coulée.

3. Procédé selon l'une des revendications précédentes,
**caractérisé en ce que**
une partie de référence (11) est prévue sur l'outil de moulage (1), sur laquelle aucun agent de démoulage (2) n'est appliqué lors de l'application de l'agent de démoulage (2) sur la surface de moulage (10), dans lequel une image infrarouge de la partie de référence (11) est également enregistrée avant ou pendant ou apprès l'enregistrement de l'image infrarouge de la surface de moulage (10), dans lequel la contribution de l'absorption infrarouge de l'agent de démoulage (2) est déterminée en comparant l'image infrarouge de la surface de moulage (10) avec l'image infrarouge de la partie de référence (11).

4. Procédé selon l'une des revendications précédentes,
**caractérisé en ce que**
l'outil de moulage (1) est chauffé dans le processus de coulée et sert de source de rayonnement lors de l'enregistrement de l'image infrarouge de la surface de moulage (10), de la première image infrarouge de référence, de la seconde image infrarouge de référence et/ou de l'image infrarouge de la partie de référence (11).

5. Système (100) destiné à la coulée de pièces moulées comprenant au moins un dispositif de coulée doté d'un outil de moulage (1) avec une surface de moulage (11), une unité d'application (3) destinée à l'application d'un agent de démoulage (2) sur la surface de moulage (10), une caméra thermique (4) et une unité d'évaluation (5), dans lequel la caméra thermique (4) est conçue pour enregistrer une image infrarouge de la surface de moulage (10) dans un domaine spectral d'une bande d'absorption caractéristique de l'agent de démoulage (2) et dans lequel l'unité d'évaluation (5) est conçue pour déterminer le recouvrement de la surface de moulage (10) avec l'agent de démoulage (2) à l'aide de la contribution de l'absorption infrarouge de l'agent de démoulage (2) à l'image infrarouge, dans lequel on exploite le fait que la contribution de l'absorption infrarouge de l'agent de démoulage (2) génère un contraste dans l'image infrarouge entre des zones de la surface de moulage (10) avec agent de démoulage (2) appliqué et des zones sur lesquelles la couche d'agent de démoulage (2) est absente ou réalisée trop mince.

6. Système (100) selon la revendication 5,
**caractérisé en ce que**
le système (100) présente un filtre passe-bande (41) associé à la caméra thermique (4), dans lequel le filtre passe-bande (41) laisse passer la lumière dans un domaine spectral d'une bande d'absorption caractéristique de l'agent de démoulage (2).

7. Système (100) selon la revendication 5 ou 6,
**caractérisé en ce que**
la caméra thermique (4) est disposée sur l'unité d'application (3).

8. Utilisation d'un système (100) selon l'une des revendications 5 à 7 pour exécuter un procédé selon l'une des revendications 1 à 4.
